# EUROPÄISCHE PATENTSCHRIFT

(11) **EP 0 739 773 B1**
(45) Veröffentlichungstag und Bekanntmachung des Hinweises auf die Patenterteilung: **05.09.2001**
(21) Anmeldenummer: 96105857.5
(22) Anmeldetag: 15.04.1996
(51) Int. Cl.: B60N 2/24

(54) **Sitz für Fahrgäste**
Passenger seat
Siège pour passagers

(30) Priorität: 29.04.1995 DE 29507216 U
(43) Veröffentlichungstag der Anmeldung: 30.10.1996
(73) Patentinhaber: Hermann Schnierle Gesellschaft mit beschränkter Haftung, 86368 Gersthofen (DE)
(72) Erfinder: Schnierle, Martin, 86368 Gersthofen (DE)
(74) Vertreter: Charrier, Rolf, Dipl.-Ing.

(56) Entgegenhaltungen:
- EP-A- 0 336 852
- EP-A- 0 435 740
- WO-A-94/26553
- DE-A- 4 120 608
- US-A- 4 890 885

## Beschreibung

Die Erfindung betrifft einen Sitz für Fahrgäste nach dem Oberbegriff des Anspruches 1.

Es ist seit langem bekannt, Sitze in Pkws mit Dreipunktgurten auszurüsten. Der Gurtroller ist hierbei in einem Fahrzeugholm integriert. Daneben ist es bekannt, den Gurtroller in der Rücklehne zu integrieren, was jedoch nur bei Fahrzeugen der Fall ist, bei denen die Rücklehne mit dem Fahrzeugchassis verbunden ist. An die Rücklehnenkonstruktion werden hierbei hohe Anforderungen gestellt, weshalb diese aus Druckgußteilen aufgebaut ist. Gleich hohe Anforderungen wird an die Verbindung zwischen der Rücklehne und dem Sitzrahmen.

Fahrgastsitze, insbesondere Omnibussitze sind von vergleichsweise leichter Konstruktion. Da Fahrzeugholme nicht zur Verfügung stehen, ist die erstgenannte Konstruktion bei Omnibussitzen nicht möglich. Eine Integration des Gurtrollers in die Rücklehne bei einem Omnibussitz würde zu einer aufwendigen teueren Konstruktion führen. Hierbei ist beachtlich, daß die Rücklehne bei einem Omnibussitz aus einem relativ leichten Rohrrahmen besteht. Weiterhin ist beachtlich, daß die Rücklehne bei Omnibussitzen über eine Gasdruckfeder stufenlos verstellt werden kann.

Es besteht die Aufgabe, Fahrgastsitze, insbesondere Omnibussitze so zu modifizieren, daß die Rücklehne den auftretenden Maximalverzögerungen bzw. -beschleunigungen standhält, die stufenlose Verstellung der Rücklehne jedoch beibehalten wird und die Konstruktion des Sitzes nicht aufwendig wird und somit die Verwendung eines Gurts möglich wird.

Gelöst wird diese Aufgabe mit den Merkmalen des Anspruches 1. Vorteilhafte Ausgestaltungen sind den Unteransprüchen entnehmenbar.

Ausführungsbeispiele werden nachfolgend an Hand der Zeichnungen näher erläutert. Es zeigen:
**Fig. 1** die Seitenansicht eines ungepolsterten Omnibussitzes;
**Fig. 2** der Omnibussitz nach Figur 1 im gepolsterten Zustand;
**Fig. 3** eine Ansicht des Omnibussitzes von hinten; und
**Fig. 4** einen Vertikalschnitt durch den unteren Teil eines seitlich verschiebbaren Omnibussitzes.

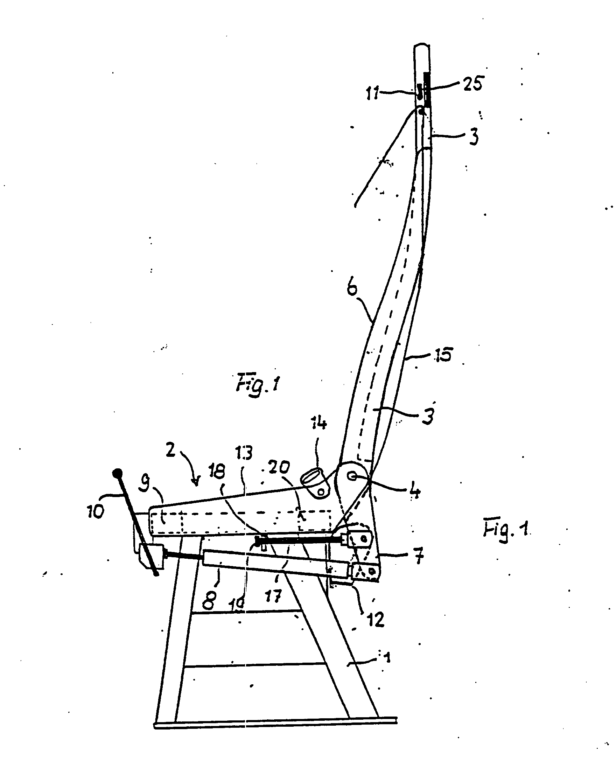

Der Sitz nach Figur 1 ist auf einem Sitzfuß 1 angeordnet. Er besteht aus einem mit dem Sitzfuß 1 verbundenen Sitzrahmen 2 und einem Teil der Rücklehne bildenden Rohrrahmen 3. Die Rücklehne ist über die Anlenkachse 4 am Sitzseitenteil 13 des Sitzrahmens 2 angelenkt. Der Rohrrahmen 3 besteht aus einem im wesentlichen U-förmig gebogenen Rohr, das so weit nach oben verlängert ist, daß sich eine Kopfstütze 5 ergibt, die in die Rücklehne integriert ist. An den Rohrrahmen 3 sind seitlich flache, in Verstellrichtung der Rücklehne verlaufende Verstärkungsteile 6 angeschweißt, die unterhalb des Kopfstützenbereichs beginnen. Diese Verstärkungsteile weisen nach unten eine zunehmende Horizontalabmessung auf. Eines der Verstärkungsteile 6 weist eine Verlängerung 7 auf, die sich nach unten über die Anlenkachse 4 erstreckt. An dieser Verlängerung 7 ist eine Gasdruckfeder 8 angelenkt, deren vordere Aufnahme mit dem Sitzfußquerträger 9 des Sitzrahmens 2 verbunden ist. Mittels des Hebels 10 ist die Gasdruckfeder 8 lösbar und arretierbar und zwar sowohl auf Zug als auch auf Druck. Dies bedeutet, daß die Rücklehne nach vorne und hinten stufenlos geneigt werden kann und in jeder Stellung arretierbar ist.

Im Bereich der Kopfstütze 5 ist an den Rohrrahmen 3 eine seitlich vom Rohrrahmen abstehende Befestigungslasche 25 angeschweißt, an welcher die Umlenklasche 11 für den Gurt 15 befestigt ist.

Am hinteren Sitzfuß 1 ist mittig zur Rücklehne ein Gurtroller 12 befestigt. An einem Sitzseitenteil 13 ist ein Gurthalter 14 befestigt, während am anderen Sitzseitenteil 13 ein Gurtschloß 16 befestigt ist. Der Gurt 15 verläuft somit im angelegten Zustand vom Gurtroller 12 hinter dem Rohrrahmen 3 schräg nach oben zur Umlenklasche 11, welche seitlich vom Rohrrahmen 3 absteht, von dort über die Vorderseite der Rücklehne zum Gurtschloß 16 und von dort zum Gurthalter 14.

Da die Gefahr bestehen könnte, daß die Gasdruckfeder 8 bei einem Unfall versagt oder bei einem Unfall versehentlich der Betätigungshebel 10 berührt wird und damit die Gasdruckfeder 8 löst, ist an der Verlängerung 7 eine Begrenzungsstange 17 angelegt, die im wesentlichen parallel zur Gasdruckfeder 8 verläuft. Am Sitzrahmen 2 ist ein Arretierteil 18 befestigt, das eine Bohrung aufweist, durch welche die Begrenzungsstange 17 verläuft. Auf die Begrenzungsstange 17 ist eine Mutter 19 aufgeschraubt. Auf diese Weise ist der Verstellwinkel der Rücklehne nach vorn begrenzt. Nach hinten wird ein Durchfallen der Rücklehne durch Anschlag der Verlängerung 7 am hinteren Sitzfußquerträger 20 verhindert. Im gepolsterten Zustand geben die Verstärkungsteile 6, welche nach vorne über den Rohrrahmen 3 überstehen, dem Sitz einen guten Seitenhalt.

Im unteren Teil des Kopfstützenbereichs weist der Rohrrahmen 3 eine Querverstrebung 26 auf. Eine solche kann auch im unteren Bereich der Rücklehne vorgesehen sein.

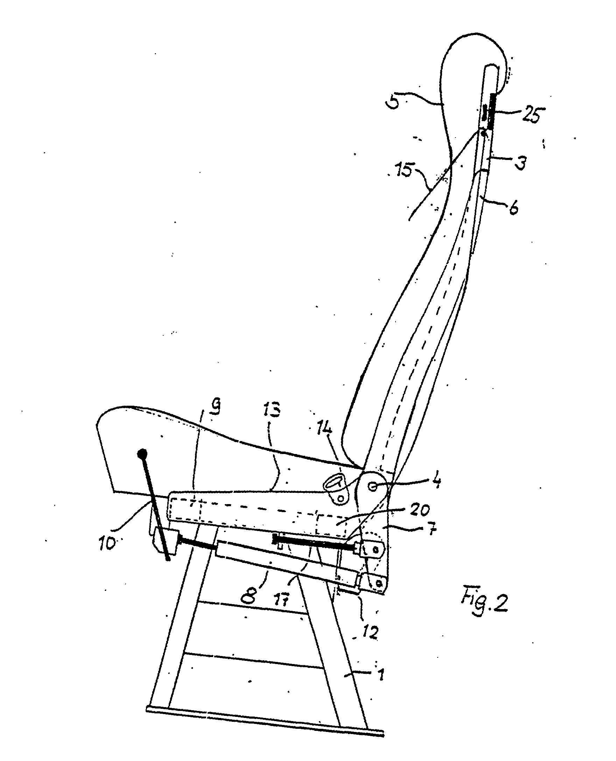

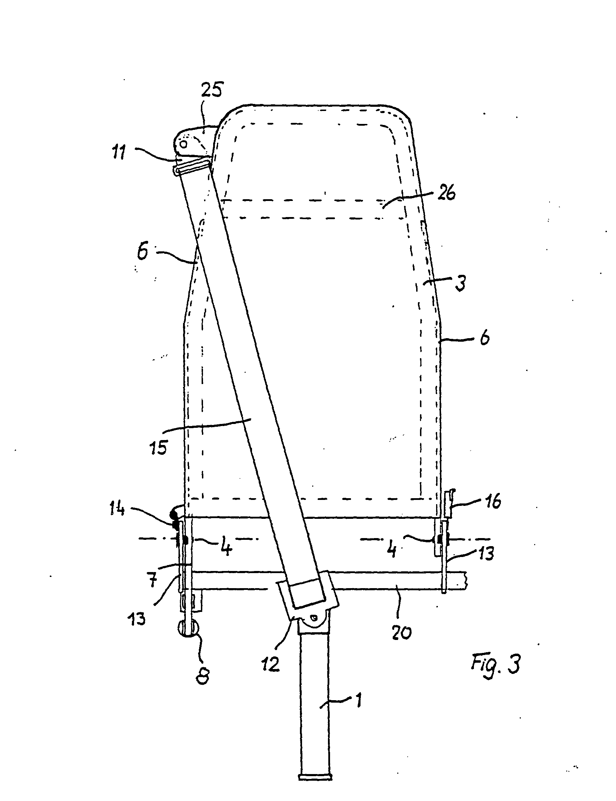

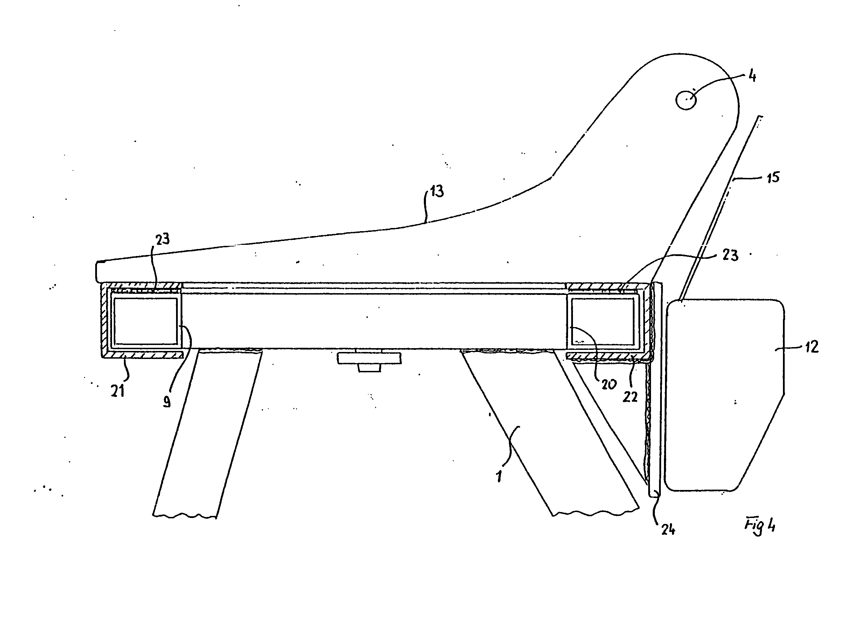

Da es wünschenswert ist, daß die gangseitigen Sitze seitlich verschiebbar sind, wird die Konstruktion nach Figur 4 gewählt. Nachfolgend werden nur die Unterschiede in Bezug auf die Konstruktion nach den Figuren 1 bis 3 erläutert. Der übrige Sitzaufbau entspricht demjenigen nach den Figuren 1 bis 3.

Der vordere und der hintere Sitzfußquerträger 9, 20 sind jeweils durch ein U-Profilteil 21, 22 umfaßt, deren freie Seitenschenkel gegeneinander weisen. Zwischen den oberen freien Schenkeln der U-Profilteile 21, 22 und den Sitzfußquerträgern 9, 20 ist jeweils eine Kunststoffgleitfläche 23 vorgesehen. Mit den U-Profilteilen 21, 22 sind die beiden Sitzseitenteile 13 verschweißt. Am Mittelschenkel des hinteren U-Profilteils 22 ist eine nach unten verlaufende Platte 24 angeschweißt, an welcher der Gurtroller 12 befestigt ist. Das vordere Ende der Gasdruckfeder 8 ist am vorderen U-Profilteil 21 angelenkt.

## Patentansprüche

1. Sitz für Fahrgäste, insbesondere Omnibussitz mit schwenkbarer Rücklehne, die einen Rohrrahmen aufweist, der am Sitzrahmen angelenkt ist, wobei zwischen dem Rohrrahmen und dem Sitzrahmen eine Gasdruckfeder zur stufenlosen Verstellung der Rücklehne verläuft, gekennzeichnet durch die Kombination folgender Merkmale:
(a) der Rohrrahmen (3) ist in den Kopfstützenbereich verlängert und die Kopfstütze (5) in die Rücklehne integriert,
(b) die seitlichen Rahmenteile des Rohrrahmens (3) sind mit flachen, in Verstellrichtung der Rücklehne verlaufenden Verstärkungsteilen (6) verstärkt,
(c) das Verstärkungsteil (6) eines seitlichen Rahmenteils ist über die Anlenkachse (4) am Sitzrahmen (2) nach unten verlängert,
(d) an der Verlängerung (7) des Verstärkungsteils (6) ist die Gasdruckfeder (8) angelenkt,
(e) parallel zur Gasdruckfeder (8) verläuft zwischen der Verlängerung (7) des Verstärkungsteils (6) und dem Seitenteil (13) des Sitzrahmens (2) eine Begrenzungsstange (17), welche den Verstellwinkel der Rücklehne nach vorne begrenzt und
(f) der Sitz ist mit einem Dreipunktgurt ausgerüstet.

2. Sitz nach Anspruch 1, **dadurch gekennzeichnet**, daß die Verstärkungsteile (6) oberhalb der Anlenkachse (4) nach vorne über den Rohrrahmen (3) überstehen und als Seitenführung der Rücklehne gepolstert sind.

3. Sitz nach Anspruch 1 oder 2, **dadurch gekennzeichnet, daß** am hinteren Sitzfuß (1) ein Gurtroller (12) mittig zur Rücklehne befestigt ist, dessen Gurt (15) hinter dem Rohrrahmen (3) zu einer Umlenklasche (11) am Rohrrahmen (3) verläuft, die im Kopfstützenbereich angeordnet ist, von dort schräg über die Rücklehne zu einem Gurtschloß (16) an einem Sitzseitenteil (13) des Sitzrahmens (2) und am gegenüberliegenden Sitzseitenteil (13) befestigt ist.

4. Sitz nach einem der Ansprüche 1 bis 3, **dadurch gekennzeichnet**, daß die Verstärkungsteile (6) mit dem Rohrrahmenteilen (3) verschweißt sind.

5. Sitz nach Anspruch 3, **dadurch gekennzeichnet**, daß eine Befestigungslasche (25) seitlich vom Rohrrahmen (3) absteht und mit diesem verschweißt ist und an dieser Befestigungslasche (25) die Umlenklasche (11) befestigt ist.

6. Sitz nach einem der Ansprüche 1 bis 5, **dadurch gekennzeichnet**, daß die Begrenzungsstange (17) an der Verlängerung (7) des Verstärkungsteils (6) angelenkt und durch eine Bohrung eines Arretierteils (18) an der Unterseite des Seitenteils (13) des Sitzrahmens (2) geführt ist und am vorderen Ende einen Anschlag aufweist, dessen Durchmesser größer ist als der Bohrungsdurchmesser.

7. Sitz nach Anspruch 6, **dadurch gekennzeichnet**, daß der Anschlag aus einer auf die Begrenzungsstange (17) aufgeschraubten Mutter (19) besteht.

8. Sitz nach einem der Ansprüche 1 bis 7, **dadurch gekennzeichnet**, daß der Verstellwinkel der Rücklehne nach hinten begrenzt ist durch Anschlag der Verlängerung (7) am hinteren Sitzfußquerträger (20).

9. Sitz nach einem der Ansprüche 1 bis 8, **dadurch gekennzeichnet**, daß die Gasdruckfeder (8) in beiden Richtungen blockierbar ist.

10. Sitz nach einem der Ansprüche 1 bis 9, **dadurch gekennzeichnet**, daß der Rohrrahmen (3) mindestens im unteren Teil des Kopfstützenbereichs eine Querverstrebung (26) aufweist.

11. Sitz nach einem der Ansprüche 1, 2 und 4 bis 10, **dadurch gekennzeichnet**, daß der vordere und hintere Sitzfußquerträger (9, 20) jeweils von einem U-Profilteil (21, 22) des Sitzrahmens (2) umfaßt ist, deren freie Schenkel gegeneinander weisen und am hinteren U-Profilteil (22) mittig der Gurtroller (12) befestigt ist.

12. Sitz nach Anspruch 11, **dadurch gekennzeichnet**, daß zwischen den Sitzfußquerträgern (9, 20) und den oberen Schenkeln der U-Profilteile (21, 22) eine Kunststoffgleitfläche (23) angeordnet ist.

13. Sitz nach Anspruch 11 oder 12, **dadurch gekennzeichnet**, daß die Gasdruckfeder (8) am vorderen U-Profilteil (21) angelenkt ist.

14. Sitz nach einem der Ansprüche 11 bis 13, **dadurch gekennzeichnet**, daß an den U-Profilteilen (21, 22) die Sitzseitenteile (13) angeschweißt sind.

## Claims

1. Seat for passengers, in particular bus seat with a pivoting backrest which exhibits a tubular frame which is articulated on the seat frame, with a gas-filled spring for stepless adjustment of the backrest running between the tubular frame and the seat frame, characterised by the combination of the following features:
a) the tubular frame (3) is extended into the area of the headrest and the headrest (5) is integrated in the backrest,
b) the side frame parts of the tubular frame (3) are reinforced with flat reinforcing parts (6) running in the direction of adjustment of the backrest,
c) the reinforcing part (6) of a side frame part is extended downwards beyond the articulation axis (4) on the seat frame (2),
d) the gas-filled spring (8) is articulated on the extension (7) of the reinforcing part (6),
e) a limiting rod (17), which limits the angle of forward adjustment of the backrest, runs parallel to the gas-filled spring (8) between the extension (7) of the reinforcing part (6) and the side part (13) of the seat frame (2), and
f) the seat is equipped with a three-point belt.

2. Seat according to claim 1, **characterised in that** the reinforcing parts (6) above the articulation axis (4) project forwards beyond the tubular frame (3) and are padded forming side guides of the backrest.

3. Seat according to claim 1 or 2, **characterised in that** on the rear seat base (1) a belt reel (12) is secured centrally in relation to the backrest, the belt (15) of which runs behind the tubular frame (3) to a guide (11) located on the tubular frame (3) and disposed in the headrest area, and from there obliquely over the backrest to a belt buckle (16) on a seat side part (13) of the seat frame (2) and is secured to the opposing seat side part (13).

4. Seat according to one of claims 1 to 3, **characterised in that** the reinforcing parts (6) are welded to the tubular frame parts (3).

5. Seat according to claim 3, **characterised in that** a fixing plate (25) protrudes laterally from the tubular frame (3) and is welded to the latter, and the guide (11) is secured to this fixing plate (25).

6. Seat according to one of claims 1 to 5, **characterised in that** the limiting rod (17) is articulated on the extension (7) of the reinforcing part (6) and is guided through a bore of a locking part (18) on the underside of the side part (13) of the seat frame (2) and at the front end exhibits a stop the diameter of which is greater than the bore diameter.

7. Seat according to claim 6, **characterised in that** the stop consists of a nut (19) screwed onto the limiting rod (17) .

8. Seat according to one of claims 1 to 7, **characterised in that** the angle of rearward adjustment of the backrest is limited by the stop of the extension (7) on the rear seat base crossmember (20).

9. Seat according to one of claims 1 to 8, **characterised in that** the gas-filled spring (8) can be immobilised in both directions.

10. Seat according to one of claims 1 to 9, **characterised in that** the tubular frame (3) exhibits a transverse brace (26) at least in the lower part of the headrest area.

11. Seat according to one of claims 1, 2 and 4 to 10, **characterised in that** the front and rear seat base crossmember (9, 20) is in each case enclosed by a U-profile part (21, 22) of the seat frame (2) the free limbs of which point towards one another, and the belt reel (12) is secured to the rear U-profile part (22) in the centre.

12. Seat according to claim 11, **characterised in that** a plastic sliding face (23) is disposed between the seat base crossmembers (9, 20) and the upper limbs of the U-profile parts (21, 22).

13. Seat according to claim 11 or 12, **characterised in that** the gas-filled spring (8) is articulated on the front U-profile part (21).

14. Seat according to one of claims 11 to 13, **characterised in that** the seat side parts (13) are welded to the U-profile parts (21, 22).

## Revendications

1. Siège pour passager, en particulier siège d'omnibus composé d'un dossier inclinable, lequel présente un châssis tubulaire qui est articulé sur le bâti du siège, moyennant quoi un ressort à pression de gaz s'étend entre le châssis tubulaire et le bâti du siège de façon à régler le dossier sans a-coups, caractérisé par la combinaison des caractéristiques suivantes :
(a) le châssis tubulaire (3) se prolonge dans la zone de l'appui-tête et l'appui-tête (5) s'intègre dans le dossier,
(b) les parties latérales de châssis du châssis tubulaire (3) sont renforcées à l'aide de parties de renforcement (,6) plates s'étendant dans le sens de réglage du dossier,
(c) la partie de renforcement (6) d'une partie latérale de châssis est prolongés vers le bas par l'axe d'articulation (4), au niveau du bâti du siège (2),
(d) le ressort à pression de gaz (8) est articulé au prolongement (7) de la partie de renforcement (6),
(e) une barre de délimitation (17) parallèle au ressort à pression de gaz (8) s'étend entre le prolongement (7) de la partie de renforcement (6) et la partis latérale (13) du bâti du siège (2), laquelle barre délimite l'angle de réglage du dossier vers l'avant et
(f) le siège est équipé d'une ceinture trois points.

2. Siège selon la revendication 1, **caractérisé en ce que** les parties de renforcement (6) situées au-dessus de l'axe d'articulation (4) font saillie vers l'avant au-dessus du châssis tubulaire (3) et sont rembourrées pour faire office de guidage latéral du dossier.

3. Siège selon la revendication 1 ou la revendication 2, **caractérisé en ce qu**'un enrouleur de ceinture (12) est fixé au niveau du pied du siège arrière (1), au milieu du dossier, la ceinture (15) de cet enrouleur s'étendant derrière le châssis tubulaire (3) en direction d'un axe de renvoi (11) situé au niveau du châssis tubulaire (3), lequel axe est menagé dans la zone de l'appui-tête, et est fixé à partir de cet endroit, de manière oblique sur l'ensemble du dossier pour atteindre un fermoir de ceinture (16), à une partie latérale de siège (13) du bâti du siège (2) et à la partie latérale de siège opposée (14).

4. Siège selon l'une quelconque des revendications 1 à 3, **caractérisé en ce que** les parties de renforcement (6) sont soudées aux parties du châssis tubulaire (3).

5. Siège selon la revendication 3, **caractérisé en ce qu**'une languette de fixation (25) est latéralement éloignée du châssis tubulaire (3) et est soudée avec ce dernier et en ce que l'axe de renvoi (11) est fixé à cette languette de fixation (25).

6. Siège selon l'une quelconque des revendications 1 à 5, **caractérisé en ce que** la barre de délimitation (17) est articulée au prolongement (7) de la partie de renforcement (6) et en ce qu'elle est dirigée vers la face inférieure de la partie latérale (13) du bâti du siège (2) grâce à un alésage d'une partie formant arrêt (18) et présente une butée au niveau de l'extrémité avant, dont le diamètre est supérieur au diamètre de l'alésage.

7. Siège selon la revendication 6, **caractérisé en ce que** la butée se compose d'un écrou (19) vissé sur la barre de délimitation (17).

8. Siège selon l'une quelconque des revendications 1 à 7, **caractérisé en ce que** l'angle de réglage du dossier est limité vers l'arrière par la butée du prolongement (7) au niveau de la barre transversale du pied du siège arrière (20).

9. Siège selon l'une quelconque des revendications 1 à 8, **caractérisé en ce que** le ressort à pression de gaz (8) peut être bloqué dans les deux directions.

10. Siège selon l'une quelconque des revendications 1 à 9, **caractérisé en ce que** le châssis tubulaire (3) présente, au moins dans la partie inférieure de la zone de l'appui-tête, un renforcement transversal (26).

11. Siège selon l'une quelconque des revendications 1, 2 et 4 à 10, **caractérisé en ce que** les barres transversales des pieds des sièges avant et arrière (9, 20) se composent respectivement d'une section profilée en forme de U du bâti du siège (2) dont les montants libres se présentent l'un contre l'autre et sont fixés au niveau de la section profilée arrière (22) en U, au milieu de l'enrouleur de ceinture (12) .

12. Siège selon la revendication 11, **caractérisé en ce qu**'une surface de glissement en plastique (23) est ménagée entre les barres transversales des pieds des sièges (9, 20) et les montants supérieurs des sections profilées en U (21, 22).

13. Siège selon la revendication 11 ou la revendication 12, **caractérisé en ce que** le ressort à pression de gaz (8) est articulé à la section profilée en U avant (21).

14. Siège selon l'une quelconque dés revendications 11 à 13, **caractérisé en ce que** les parties latérales du siège (13) sont soudées aux sections profilées en U (21, 22).
